# EUROPÄISCHE PATENTANMELDUNG

(11) **EP 4 242 140 A2**
(43) Veröffentlichungstag der Anmeldung: **13.09.2023**
(21) Anmeldenummer: 23160127.9
(22) Anmeldetag: 06.03.2023
(51) Int. Cl.: B65G 47/14, B25J 9/00, B25J 9/16, B65G 47/80, B65G 47/91, G05B 19/418

(54) **VORRICHTUNG ZUR VEREINZELUNG UND EINZELENTNAHME VON TEILEN UND KALIBRIERVERFAHREN**

(30) Priorität: 10.03.2022 DE 102022105608
(71) Anmelder: thinkTEC GmbH, 94481 Grafenau (DE)
(72) Erfinder: Weber, Roman, 94481 Grafenau (DE)
(74) Vertreter: Wolf, Gerhard

(57) **Zusammenfassung**

Die Erfindung betrifft eine Vorrichtung zur Vereinzelung und Einzelentnahme von Teilen umfassend einen Bunker (2) zur Aufnahme der als Schüttgut bereitgestellten Teile, eine erste Fördereinrichtung (3) zum Fördern der Teile von dem Bunker (2) auf eine zweite Fördereinrichtung (4), die eine Teileförderstrecke (5) ausbildet, eine über der Förderstrecke (5) angeordnete Kamera (6) zur Erfassung der Teile während diese von der zweiten Fördereinrichtung (4) durch den Erfassungsbereich (6.1) der Kamera (6) bewegt werden, eine Entnahmeeinrichtung (7) mit einem Entnahmeorgan (7.1), das zum Abnehmen der Teile von der zweiten Fördereinrichtung (4) ausgebildet ist, wobei eine Steuereinrichtung für die Entnahmeeinrichtung (7) vorgesehen ist, wobei die Steuereinrichtung dazu konfiguriert ist, die Entnahmeeinrichtung (7) derart anzusteuern, dass das Entnahmeorgan (7.1) der Entnahmeeinrichtung (7) ein einzelnes Teil während dessen Bewegung entlang der Förderstrecke (5) oder nach dem Stoppen der zweiten Fördereinrichtung (4) fixiert und von der Förderstrecke (5) abnimmt.

## Beschreibung

Die Erfindung betrifft eine Vorrichtung, die zur Vereinzelung von als Schüttgut bereitgestellten Teilen und zur Einzelentnahme der vereinzelten Teile ausgebildet ist.

Vorrichtungen zur Vereinzelung von Teilen und Einzelentnahme sind bereits bekannt. Als Schüttgut bereitgestellte Teile müssen bei der Vereinzelung zunächst derart voneinander separiert werden, dass diese einzeln entnehmbar werden, d.h. die Teile müssen aus dem Gemenge örtlich voneinander getrennt werden. Zudem muss ein zu entnehmendes Teil eine vorgegebene Lage aufweisen, damit eine automatisierte Entnahme möglich ist. Diese Lage wird nachfolgend als "Gutlage" bezeichnet.

Insbesondere sind Vorrichtungen mit Schwingförderern bekannt, bei denen mehrere Teile auf eine zeitweise vibrierende Fläche gefördert werden. Nach einem Vibrationszyklus, bei dem die Teile ihre Lage und Ausrichtung ändern, werden mittels einer Kamera Bildinformationen der Teile aufgenommen und ermittelt, welche Teile sich in Gutlage befinden. Diese Teile werden anschließend durch eine automatisierte Entnahmeeinrichtung, beispielsweise einen Roboter, entnommen.

Problematisch bei den bekannten Vorrichtungen ist, dass diese häufig einen geringen Durchsatz aufweisen, da die Teile durch den Schwingförderer ihre Lage zufällig ändern und es dadurch zu Phasen kommen kann, in denen keine oder nur sehr wenige Teile vom Schwingförderer abgenommen werden können.

Ausgehend hiervon ist es Aufgabe der Erfindung, eine Vorrichtung anzugeben, die einen technisch einfachen Aufbau aufweist und eine Vereinzelung und automatische Entnahme von Teilen mit einem hohen Durchsatz (d.h. entnommene Teile pro Zeiteinheit) ermöglicht.

Die Aufgabe wird durch ein Verfahren mit den Merkmalen des unabhängigen Patentanspruchs 1 gelöst. Ein Verfahren zur Kalibrierung einer Vereinzelungs- und Entnahmevorrichtung ist Gegenstand des nebengeordneten Patentanspruchs 12. Bevorzugte Ausführungsformen sind Gegenstand der Unteransprüche.

Gemäß einem ersten Aspekt wird eine Vorrichtung zur Vereinzelung und Einzelentnahme von Teilen offenbart. Die Vorrichtung umfasst einen Bunker zur Aufnahme der als Schüttgut bereitgestellten Teile. Der Bunker kann beispielsweise trichter- oder schalenartig ausgebildet sein und einen Aufnahmeraum für das schüttfähige Gemenge von Teilen ausbilden. Zudem weist die Vorrichtung eine erste Fördereinrichtung zum Fördern der Teile von dem Bunker auf eine zweite Fördereinrichtung auf. Die erste Fördereinrichtung ist vorzugsweise dazu ausgebildet, die Teile von dem Bunker auf die zweite Fördereinrichtung anzuheben. Die zweite Fördereinrichtung bildet eine Förderstrecke für die Teile aus. Entlang dieser Förderstrecke ist ein Entnahmebereich vorgesehen, in dem die Teile von der zweiten Fördereinrichtung abgenommen werden.

Zudem ist über der Förderstrecke eine Kamera zur Erfassung der Teile angeordnet, wobei die Kamera dazu eingerichtet ist, die Teile während deren Bewegung mittels der zweiten Fördereinrichtung durch den Erfassungsbereich der Kamera zu erfassen. Des Weiteren ist eine Entnahmeeinrichtung mit einem Entnahmeorgan vorgesehen, das zum Abnehmen der Teile von der zweiten Fördereinrichtung ausgebildet ist. Die Vorrichtung weist eine Steuereinrichtung für die Entnahmeeinrichtung auf, die dazu konfiguriert ist, die Entnahmeeinrichtung derart anzusteuern, dass das Entnahmeorgan der Entnahmeeinrichtung ein einzelnes, auf der Förderstrecke gefördertes Teil fixiert und von der Förderstrecke abnimmt. Dabei kann das Teil entweder während dessen Bewegung entlang der Förderstrecke (d.h. direkt im bewegten Zustand) oder nach dem Stoppen der zweiten Fördereinrichtung, d.h. das Teil wird durch die zweite Fördereinrichtung nicht oder im Wesentlichen nicht bewegt, abgenommen werden.

Die Vorrichtung dazu ausgebildet, dass die Lage der Teile in einem Entnahmebereich der Förderstrecke unverändert bleibt, bis die Entnahme durch die Entnahmeeinrichtung erfolgt.

Zudem ist die Vorrichtung dazu ausgebildet, die Teile, die nicht entnommen werden können, von der zweiten Fördereinrichtung in den Bunker zurückzufördern. Die zurückgeförderten Teile können beispielsweise nicht in einer Gutlage auf der zweiten Fördereinrichtung platziert sein.

Der technische Vorteil der Vorrichtung besteht darin, dass nach dem Durchlaufen des Erfassungsbereichs der Kamera die Lage der Teile relativ zum Förderorgan der zweiten Fördereinrichtung bekannt ist und nicht verändert wird, so dass basierend auf dieser bekannten Lage ermittelt werden kann, ob eine Teileentnahme durch die Entnahmeeinrichtung möglich ist oder nicht. Damit kann der Durchsatz der Entnahmeeinrichtung gesteigert werden. Durch die fehlende Notwendigkeit der Applizierung von Schwingungen auf die Teile wird zudem der Aufbau der Vorrichtung vereinfacht und es werden Vibrationen vermieden, die die Teilerfassung negativ beeinflussen.

Gemäß einem Ausführungsbeispiel weist die zweite Fördereinrichtung auf einer Förderfläche eine Referenzmarkierung auf, mittels der die Lage und Ausrichtung des Erfassungsbereichs der Kamera relativ zur zweiten Fördereinrichtung ermittelbar ist. Unter "Lage der Kamera" wird insbesondere die Position der Kamera entlang der Förderstrecke verstanden. Unter "Ausrichtung der Kamera" relativ zur zweiten Fördereinrichtung kann insbesondere die rotative Ausrichtung der Kamera um eine vertikale Hochachse verstanden werden. Insbesondere kann die Lage der Kamera relativ zu einer Nulllage bestimmt werden, beispielsweise dadurch, wie weit das Förderorgan der zweiten Fördereinrichtung bezogen auf die Nulllage weiterbewegt wurde, wenn die Referenzmarkierung erfasst wird. Der Abstand der Kamera von der Nulllage kann beispielsweise ein Winkelmaß oder ein Längenmaß sein. Der Abstand kann beispielsweise auf Basis der Ausgangsinformationen eines Winkelencoders bestimmt werden, der zur Bewegung des Förderorgans der zweiten Fördereinrichtung verwendet wird. Dadurch kann beim Erfassen des Teils durch die Kamera dessen Abstand in Bezug auf die Nulllage bestimmt werden.

Gemäß einem Ausführungsbeispiel ist die Referenzmarkierung rotationsunsymmetrisch ausgebildet, so dass die rotative, relativ zur zweiten Fördereinrichtung gemessene Ausrichtung der Kamera um eine vertikale Hochachse als Drehachse durch die Referenzmarkierung erfassbar ist. Durch die Kenntnis der Ausrichtung der Kamera relativ zur zweiten Fördereinrichtung kann durch eine Erfassung der Ausrichtung eines Teils durch die Kamera nachfolgend die Ausrichtung des Teils ermittelt werden, die dieses insbesondere zum Zeitpunkt der Entnahme hat. Die Ausrichtung des Teils im Raum kann sich insbesondere bei einer ringförmigen Förderstrecke entlang der Förderstrecke ändern.

Gemäß einem Ausführungsbeispiel ist eine Speichereinheit vorgesehen, in der Größeninformationen der Referenzmarkierung abgespeichert sind. Die Größeninformationen können beispielsweise die Länge und/oder Breite der Referenzmarkierung sein. Nach der Erfassung der Referenzmarkierung durch die Kamera können die Bildinformationen der Kamera dahingehend ausgewertet werden, welche Ausdehnung in Pixel die Referenzmarkierung hat. Insbesondere kann ermittelt werden, wie viele Pixel der Bildinformationen in Längsrichtung und/oder Querrichtung auf die Referenzmarkierung entfallen. Vorteilhafterweise lässt sich mittels der gespeicherten Größeninformationen der Referenzmarkierung anschließend ermitteln, welche in einem Längenmaß gemessene Größe ein Pixel der Bildinformationen hat. Wenn beispielsweise in Längsrichtung der Referenzmarkierung 40 Pixel liegen und die Länge der Referenzmarkierung in Längsrichtung 20mm beträgt, darauf rückgeschlossen werden, dass ein Pixel eine Länge von 0,5mm aufweist. Wenn anschließend ein Teil durch die Kamera erfasst wird, das eine Längserstreckung von 30 Pixel hat, kann rückgeschlossen werden, dass das Teil eine Länge von 15mm hat. Dadurch kann vorteilhafterweise die Ansteuerung der Entnahmeeinrichtung in einem Längenmaß erfolgen.

Gemäß einem Ausführungsbeispiel ist die Steuereinrichtung dazu ausgebildet, die Entnahmeeinrichtung anhand von durch die Kamera ermittelten Lageinformationen eines zu entnehmenden Teils und Bewegungsinformationen der zweiten Fördereinrichtung auf das zu entnehmende Teil aufzusynchronisieren. Damit kann das Entnahmeorgan während der Bewegung des Teils auf das Teil hinbewegt werden und das Teil von der zweiten Fördereinrichtung abnehmen.

Gemäß einem anderen Ausführungsbeispiel ist die Vorrichtung dazu ausgebildet, die zweite Fördereinrichtung derart anzusteuern, dass ein zu entnehmendes Teil zu dessen Entnahme stets in einem vordefinierten, quer zur Förderrichtung verlaufenden, linienartigen Bereich bewegt wird und, nachdem das zu entnehmende Teil diesen Bereich erreicht hat, angehalten wird, um das Teil mittels der Entnahmeeinrichtung entnehmen zu können. Unter "linienartig" wird ein Bereich verstanden, dessen in Förderrichtung gemessene Breite kleiner ist als die senkrecht zur Förderrichtung gemessene Breite der zweiten Fördereinrichtung. Damit kann die Entnahme des Teils mit geringerem Steuerungsaufwand erfolgen.

Gemäß einem Ausführungsbeispiel ist die Steuereinrichtung dazu ausgebildet, ein Teil unter konstanter oder im Wesentlichen konstanter Weiterbewegung der zweiten Fördereinrichtung zu entnehmen. Dadurch kann die Leistung der Vorrichtung, insbesondere die Anzahl der entnommenen Teile pro Zeiteinheit, gesteigert werden.

Gemäß einem Ausführungsbeispiel ist die Steuereinrichtung dazu eingerichtet, die Fördergeschwindigkeit der zweiten Fördereinrichtung zu reduzieren, wenn ein zu entnehmendes Teil innerhalb eines ersten Teils der Förderstrecke nicht entnommen wurde. Durch die Reduktion der Fördergeschwindigkeit kann der Entnahmeeinrichtung mehr Zeit gegeben werden, das Teil von der zweiten Fördereinrichtung zu entnehmen, bevor es zurück in den Bunker gefördert wird. Vorzugsweise wird vorab geprüft, ob es sich bei dem nicht entnommenen Teil um ein Teil in Gutlage handelt, d.h. es überhaupt dazu geeignet ist, von der Entnahmeeinrichtung entnommen zu werden. Insbesondere kann in einem Entnahmebereich der Förderstrecke eine erste Grenze definiert sein, die einen ersten Teilbereich des Entnahmebereichs von einem zweiten Teilbereich abgrenzt. Falls diese erste Grenze überschritten ist und sich das Teil in Gutlage befindet, wird die Reduzierung der Fördergeschwindigkeit eingeleitet.

Gemäß einem Ausführungsbeispiel ist die Steuereinrichtung dazu eingerichtet, die zweite Fördereinrichtung zu stoppen, wenn ein zu entnehmendes Teil innerhalb eines zweiten Teils der Förderstrecke, in dem das Teil mit reduzierter Fördergeschwindigkeit transportiert wurde, nicht entnommen wurde. Durch das Anhalten der zweiten Fördereinrichtung kann der Entnahmeeinrichtung noch mehr Zeit gegeben werden, das Teil von der zweiten Fördereinrichtung zu entnehmen, bevor es zurück in den Bunker gefördert wird. Insbesondere kann in dem Entnahmebereich der Förderstrecke eine zweite Grenze definiert sein, die in Förderrichtung nach der ersten Grenze liegt und die einen dritten Teilbereich des Entnahmebereichs definiert. Falls diese Grenze überschritten ist und sich das Teil in Gutlage befindet, wird die zweite Fördereinrichtung angehalten.

Gemäß einem Ausführungsbeispiel ist die Kamera dazu eingerichtet, die Lage und/oder Ausrichtung eines Teils während dessen kontinuierlicher Bewegung durch den Erfassungsbereich zu erfassen. In anderen Worten ist kein Anhalten der zweiten Fördereinrichtung erforderlich, um das Teil durch die Kamera zu erfassen. Dadurch kann die Leistung der Vorrichtung gesteigert werden.

Gemäß einem Ausführungsbeispiel ist die Steuereinrichtung dazu ausgebildet, die Teilelage des durch die zweite Fördereinrichtung transportierten Teils basierend auf der von der Kamera erfassten Lage und/oder Ausrichtung des Teils und erfassten Bewegungsinformationen der zweiten Fördereinrichtung zu bestimmen, um das Teil entnehmen zu können. Insbesondere kann die Drehlage des Teils um eine vertikale Hochachse bestimmt werden, um das Teil durch das Entnahmeorgan fixieren zu können. Alternativ oder zusätzlich kann basierend auf der von der Kamera erfassten Lage und/oder Ausrichtung des Teils und erfassten Bewegungsinformationen der zweiten Fördereinrichtung die Lage eines Teileabschnitts ermittelt werden, an dem das Teil durch das Entnahmeorgan fixiert werden soll. Dadurch ist eine gezielte Entnahme des Teils während der Weiterbewegung des Teils durch die zweite Fördereinrichtung möglich.

Gemäß einem Ausführungsbeispiel ist die zweite Fördereinrichtung ein Linearförderer oder ein Rundförderer.

Gemäß einem Ausführungsbeispiel sind entlang der Förderstrecke mehrere Funktionsbereiche vorgesehen, die örtlich getrennte Bereiche sind. Dies ist insbesondere der Ausrichtbereich, der Teileerfassungsbereich und der Entnahmebereich. Das Teil wird sequentiell durch diese örtlich getrennten Bereiche hindurchgefördert. Dadurch wird erreicht, dass das Ausrichten der Teile abgeschlossen ist, wenn die Teile in den Teileerfassungsbereich gelangen. Durch die örtliche Trennung des Teileerfassungsbereichs von dem Entnahmebereich wird erreicht, dass die Teileerfassung die Teileentnahme (und umgekehrt) nicht beeinflusst. Insbesondere muss die Förderung der Teile entlang der Förderstrecke nicht gestoppt werden, um ein Teil zu erfassen.

Gemäß einem Ausführungsbeispiel ist die Kamera in einem Teileerfassungsbereich der Förderstrecke angeordnet und der Teileerfassungsbereich ist in Förderrichtung vor dem Entnahmebereich vorgesehen. Damit ist die Erfassung der Teile und deren Entnahme in separaten Bereichen der Förderstrecke vorgesehen, d.h. insbesondere, dass das Entnahmeorgan die Teile nicht im Teileerfassungsbereich entnehmen kann.

Gemäß einem Ausführungsbeispiel ist am Beginn der Förderstrecke eine Ausrichteinrichtung vorgesehen, die eine Vorausrichtung der auf die zweite Fördereinrichtung aufgeförderten Teile bewirkt. Dadurch ist eine gewünschte Vorausrichtung der Teile möglich, insbesondere eine Platzierung in einem Mittenbereich des Förderorgans. Die Ausrichteinrichtung wirkt in einem Ausrichtbereich der Förderstrecke, wobei der Ausrichtbereich in Förderrichtung vor dem Teileerfassungsbereich vorgesehen ist. Damit ist die Ausrichtung der Teile abgeschlossen, wenn die Teile den Teileerfassungsbereich der Kamera durchlaufen.

Gemäß einem Ausführungsbeispiel ist die erste Fördereinrichtung ein Spiralförderer oder ein Schneckenförderer. Der Spiralförderer oder Schneckenförderer kann insbesondere eine Windungsdimensionierung derart aufweisen, dass durch die erste Fördereinrichtung bereits eine Vereinzelung der Teile erzielt wird, d.h. einzelne Teile mit Abstand zueinander auf die zweite Fördereinrichtung aufgefördert werden.

Gemäß einem weiteren Aspekt wird ein Verfahren zur Kalibrierung einer Vorrichtung zur Vereinzelung und Einzelentnahme von Teilen, die eine zweite Fördereinrichtung zur Förderung der Teile in Förderrichtung entlang einer Förderstrecke, eine Kamera zur Erfassung der Teile und eine Entnahmeeinrichtung mit einem Entnahmeorgan zur Entnahme der auf der Fördereinrichtung geförderten Teile umfasst. Das Kalibrierverfahren umfasst die folgenden Schritte:
- Erfassen einer auf der zweiten Fördereinrichtung vorgesehenen und durch diese bewegten Referenzmarkierung durch die Kamera;
- Ermitteln der Lage der Kamera entlang der Förderstrecke der zweiten Fördereinrichtung basierend auf der Referenzmarkierung;
- Ermitteln der örtlichen Lage der Referenzmarkierung im Erfassungsbereich der Kamera;
- Erfassen der Lage eines Entnahmebereichs im Koordinatenraum der Entnahmeeinrichtung durch Bewegen der Referenzmarkierung zumindest zu einer ersten Position und Bewegen des Entnahmeorgans der Entnahmeeinrichtung zumindest zu dieser ersten Position;
- Ermitteln der Koordinaten, die die Lage des Entnahmeorgans zumindest an der ersten Position im Raum angeben;
- Kalibrieren der Lage des Erfassungsbereichs der Kamera, der Lage des Entnahmebereichs und des Koordinatenraums der Entnahmeeinrichtung relativ zueinander basierend auf der Position der Kamera relativ zur Förderstrecke der zweiten Fördereinrichtung, der örtlichen Lage der Referenzmarkierung im Erfassungsbereich der Kamera und den Koordinaten, die die Lage des Entnahmeorgans zumindest an der ersten Position im Raum angeben.

Der technische Vorteil des Kalibrierungsverfahrens ist, dass die Vorrichtung auf technisch einfache Weise dazu konfiguriert wird, basierend auf der durch die Kamera erfassten Teilelage die Lage des Teils an der Position, an der das Teil entnommen werden soll, zu bestimmen und damit die Entnahme des Teils zu ermöglichen.

Gemäß einem Ausführungsbeispiel ist der Entnahmebereich ein quer zur Förderrichtung verlaufender linienartiger Bereich. Damit kann ein Teil durch die Entnahmeeinrichtung stets an einer bestimmten Position der Förderstrecke in Förderrichtung gesehen entnommen werden. Dies kann beispielsweise durch Stoppen der zweiten Fördereinrichtung dann, wenn das Teil an dieser Position angelangt ist, erfolgen. Alternativ ist der Entnahmebereich beispielsweise ein sich in Förderrichtung entlang der Förderstrecke erstreckender Bereich. Dieser Entnahmebereich sowie die Lage der Förderstrecke, durch die der Entnahmebereich definiert wird, können beispielsweise durch zwei oder drei Positionen definiert werden, an die die Referenzmarkierung bewegt wird oder an der sich eine Referenzmarkierung befindet.

Gemäß einem Ausführungsbeispiel wird die rotative Ausrichtung der Referenzmarkierung um eine vertikale Hochachse als Drehachse durch die Kamera erfasst. Dadurch kann die rotative Ausrichtung des Teils um eine vertikale Hochachse auch nach der Weiterbewegung des Teils durch die zweite Fördereinrichtung bestimmt werden.

Gemäß einem Ausführungsbeispiel wird aus den Bildinformationen, die beim Erfassen der Referenzmarkierung aufgenommen werden, eine pixelbezogene Größeninformation der Referenzmarkierung ermittelt. Basierend auf der pixelbezogenen Größeninformation und einer in einem Längenmaß gespeicherten Größeninformation der Referenzmarkierung wird eine in einem Längenmaß angegebene Pixelgröße berechnet. Die im Längenmaß angegebene Pixelgröße wird zur Ansteuerung der Entnahmeeinrichtung verwendet. Durch die Kenntnis der in einem Längenmaß angegebenen Größe der Referenzmarkierung (beispielsweise deren Länge und/oder Breite) kann die aus den Bildinformationen direkt ermittelbare, pixelbezogene Größeninformation in eine Größeninformation im Längenmaß umgerechnet werden. Insbesondere kann ermittelt werden, wie groß ein Pixel im Längenmaß ist. Die in einem Längenmaß angegebene Pixelgröße kann dazu verwendet werden, aus den Bildinformationen eines erfassten Teils auf die in einem Längenmaß gemessene Größe des Teils rückzuschließen. Auch kann die im Längenmaß angegebene Pixelgröße dazu verwendet werden, dass das Entnahmeorgan basierend auf in einem Längenmaß angegebenen Größen (insbesondere basierend auf Größen im metrischen Längenmaß) angesteuert wird.

Die Ausdrücke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand mehrerer Figuren an Ausführungsbeispielen näher erläutert. Es zeigen:
- Fig. 1: beispielhaft ein erstes Ausführungsbeispiel einer Vereinzelungsvorrichtung, die eine Fördereinrichtung in Form eines Rundförderers aufweist;
- Fig. 2: beispielhaft das erste Ausführungsbeispiel der Vereinzelungsvorrichtung ohne Entnahmeeinrichtung;
- Fig. 3: beispielhaft das das erste Ausführungsbeispiel der Vereinzelungsvorrichtung in Draufsichtdarstellung;
- Fig. 4: beispielhaft und schematisch die Darstellung einer Referenzmarkierung im Erfassungsbereich einer Kamera;
- Fig. 5: beispielhaft eine Darstellung vergleichbar der Fig. 3, in der die Positionen der Referenzmarkierung in unterschiedlichen Drehstellungen der zweiten Fördereinrichtung gezeigt sind, die zur Kalibrierung der Vorrichtung eingenommen werden;
- Fig. 6: beispielhaft die Form eines zu entnehmenden Teils mit durch das Kreuz gekennzeichneter Position, an der das Teil durch das Entnahmeorgan fixiert werden soll;
- Fig. 7: beispielhaft ein zweites Ausführungsbeispiel einer Vereinzelungsvorrichtung, die eine Fördereinrichtung in Form eines Längsförderers aufweist;
- Fig. 8: beispielhaft das das zweite Ausführungsbeispiel der Vereinzelungsvorrichtung gemäß Fig. 7 in Draufsichtdarstellung;
- Fig. 9: beispielhaft eine Darstellung vergleichbar der Fig. 8, in der die Positionen der Referenzmarkierung in unterschiedlichen Förderstellungen der zweiten Fördereinrichtung gezeigt sind, die zur Kalibrierung der Vorrichtung eingenommen werden;
- Fig. 10: beispielhaft eine Vorrichtung vergleichbar der in Fig. 3, wobei der Entnahmebereich ein radial verlaufender, linienartiger Bereich ist; und

- Fig. 11: beispielhaft ein Blockdiagramm, das das Verfahren zur Kalibrierung einer Vorrichtung zur Vereinzelung und Einzelentnahme von Teilen veranschaulicht.

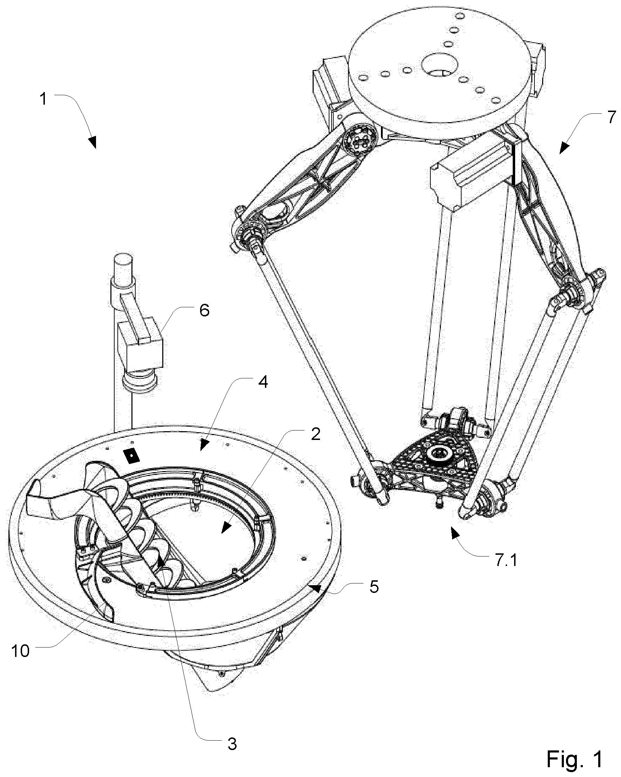

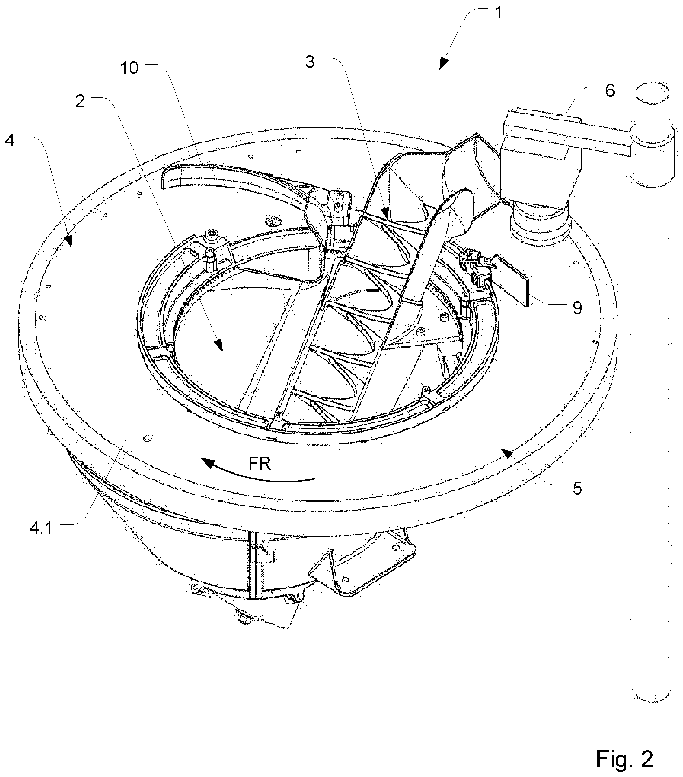

Figur 1 bis 3 zeigen jeweils beispielhaft eine Vorrichtung 1 zur Vereinzelung und Einzelentnahme von Teilen T, die als Schüttgut bereitgestellt werden. Die Vorrichtung 1 umfasst einen Bunker 2, in den eine Vielzahl von Teilen T eingebracht werden können. Die Teile T weisen dabei - wie bei Schüttgut üblich - eine nicht definierte Lage im Bunker 2 auf.

Zur Entnahme der Teile T aus dem Bunker 2 ist eine erste Fördereinrichtung 3 vorgesehen. Diese ist beispielsweise als Schneckenförderer oder Spiralförderer ausgebildet und fördert die Teile T von dem Bunker 2 auf eine zweite Fördereinrichtung 4. Die Gänge des Schnecken- oder Spiralförderers weisen eine Dimensionierung derart auf, dass jeweils ein Teil T in einen Gang aufgenommen werden kann, Dadurch wird eine Vereinzelung der Teile T erreicht.

Die zweite Fördereinrichtung 4 ist im gezeigten Ausführungsbeispiel als Rundförderer ausgebildet. Sie weist eine kreisringartige Grundform auf. Der Bunker 2 ist in diesem Ausführungsbeispiel im Zentrum der zweiten Fördereinrichtung 4 vorgesehen, und zwar vorzugsweise unterhalb der Ebene, in der die Förderstrecke 5 der zweiten Fördereinrichtung 4 liegt. Die erste Fördereinrichtung 3 ist dazu ausgebildet, die Teile aus dem Bunker 2 zu entnehmen, beispielsweise indem diese in die Windungen des Schnecken- oder Spiralförderers fallen und diese anschließend in einer schräg von unten nach oben verlaufenden Förderrichtung auf die zweite Fördereinrichtung 4 aufzufördern.

Die zweite Fördereinrichtung 4 weist ein kreisringartig ausgebildetes Förderorgan 4.1 auf, das durch einen motorischen Antrieb umlaufend bewegt wird. Die von der ersten Fördereinrichtung 3 auf die zweite Fördereinrichtung 4 aufgeförderten Teile T kommen auf einer Auflagefläche des Förderorgans 4.1 zu liegen und werden durch das Förderorgan 4.1 entlang der Förderstrecke 5 bewegt.

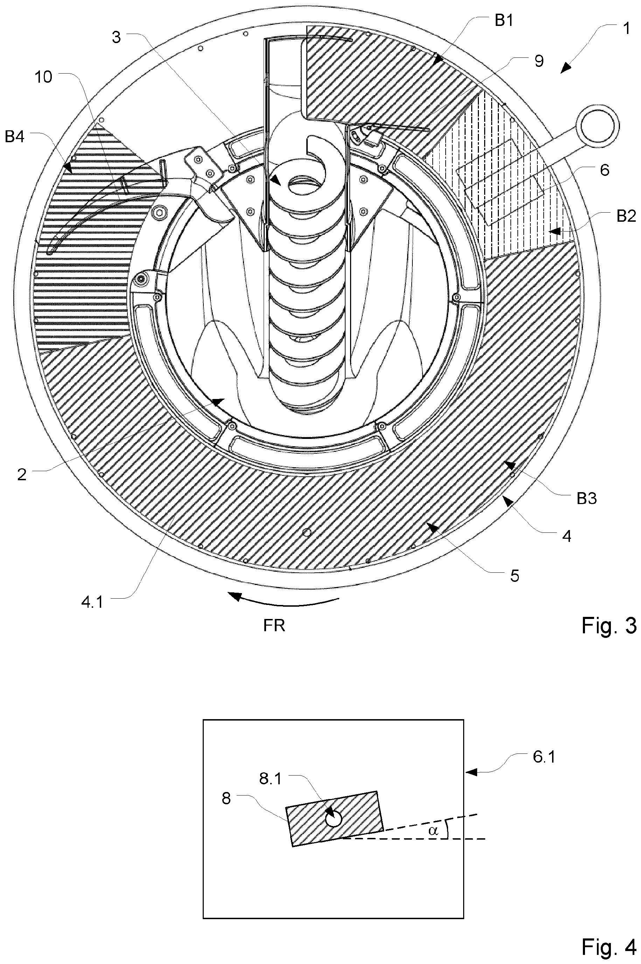

Im Anfangsbereich der Förderstrecke 5, und zwar noch vor einer Kamera 6, ist eine Ausrichteinrichtung 9 vorgesehen, mittels der eine Vorausrichtung der Teile auf der Auflagefläche des Förderorgans 4.1 erfolgt. Die Ausrichteinrichtung 9 ist vorzugsweise dazu ausgebildet, ein auf die Auflagefläche des Förderorgans 4.1 aufgefördertes Teil T in einen Mittenbereich des Förderorgans 4.1, d.h. eingerückt von einem radial inneren und einem radial äußeren Rand zu platzieren. Die Ausrichteinrichtung 9 kann beispielsweise durch eine schrägstehende Leiteinrichtung gebildet werden. Der Ausrichtbereich, in dem die Platzierung und Ausrichtung des Teils T auf der Auflagefläche des Förderorgans 4.1 erfolgt, ist in Fig. 3 mit dem Bezugszeichen B1 bezeichnet.

Anschließend wird das Teil T durch die Drehung des Förderorgans 4.1 in einen Teileerfassungsbereich B2 gefördert, in dem die Lage und Ausrichtung des Teils T auf dem Förderorgan 4.1 erfasst wird. Oberhalb des Förderorgans 4.1 ist die Kamera 6 vorgesehen. Diese weist einen Erfassungsbereich 6.1 derart auf, dass ein durch das Förderorgan 4.1 unter der Kamera 6 hindurchgefördertes Teil T während dessen kontinuierlicher Bewegung durch die Kamera 6 erfasst und Bildinformationen von diesem Teil T aufgenommen werden. In anderen Worten wird die zweite Fördereinrichtung 4 nicht gestoppt, um das Teil T mit der Kamera 6 zu erfassen und Bildinformationen aufzunehmen. Mittels dieser Bildinformationen, die ein oder mehrere Einzelbilder bzw. eine Videosequenz umfassen können, kann die Lage des Teils T und dessen Ausrichtung erfasst werden. Zudem ist es vorzugsweise möglich, durch die Bildinformationen zu entscheiden, ob das Teil T sich derart auf dem Förderorgan 4.1 befindet, dass es durch eine Entnahmeeinrichtung entnehmbar ist oder dass keine Entnahme möglich ist.

Anschließend wird das Teil T weitergefördert und einem Entnahmebereich B3 zugeführt, in dem eine Entnahme des zuvor erfassten Teils T durch eine Entnahmeeinrichtung 7 möglich ist. Die Entnahmeeinrichtung 7 kann beispielsweise durch einen Bewegungsautomaten, insbesondere einen Roboter gebildet werden. Die Entnahmeeinrichtung 7 kann, wie in Fig. 1 gezeigt, beispielsweise als Parallelkinematikroboter (auch als Delta-Roboter bezeichnet), als Gelenkarmroboter etc. ausgebildet sein.

Die Entnahmeeinrichtung 7 kann dazu ausgebildet sein, das Teil T während dessen kontinuierlichen Bewegung zu fixieren und von dem Förderorgan 4.1 abzunehmen. Hierzu wird das Entnahmeorgan 7.1 der Entnahmeeinrichtung 7 vorzugsweise auf eine vorbestimmte Stelle des zu entnehmenden Teils T zugeführt und auf dessen Bewegung aufsynchronisiert, so dass die Entnahme des Teils T während der kontinuierlichen Fortbewegung desselben möglich ist. In anderen Worten wird die zweite Fördereinrichtung 4 nicht gestoppt, um ein Teil T zu entnehmen. Das Erfassen des Teils T durch das Entnahmeorgan 7.1 kann beispielsweise durch ein Ansaugen, eine Greifbewegung etc. erfolgen, d.h. das Entnahmeorgan 7.1 kann einen Greifer oder eine Ansaugeinrichtung umfassen.

In einem ersten Ausführungsbeispiel kann die zweite Fördereinrichtung 4 stets mit einer kontinuierlichen Geschwindigkeit umlaufend angetrieben sein. Für den Fall, dass ein Teil T durch die Entnahmeeinrichtung 7 nicht abgenommen werden kann, was entweder dadurch bedingt sein kann, dass das Teil T eine Lage auf dem Förderorgan 4.1 hat, die ein Abnehmen nicht möglich macht (d.h. das Teil T befindet sich in Schlechtlage) oder die Entnahme während der Zeit, in der das Teil T sich in dem Bereich B3 befindet, in dem eine Entnahme möglich ist, nicht ausreicht, wird das nicht abgenommene Teil T durch die Weiterbewegung des Förderorgans 4.1 in einem Rückführbereich B4 in den Bunker 2 zurückgefördert.

Zur Rückführung des nicht entnommenen Teils T in den Bunker 2 ist vorzugsweise eine Rückführeinrichtung 10 vorgesehen. Diese ist vorzugsweise feststehend ausgebildet, d.h. wird nicht mit der zweiten Fördereinrichtung 4 mitbewegt. Weiterhin ist diese vorzugsweise als Teileabscheider ausgebildet und weist eine Schrägfläche auf, gegen die die nicht entnommenen Teile T gefördert werden. Aufgrund der Schrägstellung wird das Teil T durch die Reibkräfte, die durch das Weiterbewegen des Förderorgans 4.1 unter dem Teil T hindurch entstehen, radial nach innen abgelenkt und fällt dadurch in den Bunker 2 zurück. Damit kann das Teil T erneut durch die erste Fördereinrichtung 3 auf die zweite Fördereinrichtung 4 transportiert werden, um dessen Abnehmen mittels der Entnahmevorrichtung 7 erneut zu versuchen.

In einer alternativen Ausführungsform kann die zweite Fördereinrichtung 4 lediglich zeitweise mit einer kontinuierlichen Geschwindigkeit umlaufend angetrieben sein. Es kann im Entnahmebereich B3 beispielsweise eine Grenzlinie oder ein Grenzbereich definiert sein. Wenn ein Teil T bis zu dieser Grenzlinie bzw. bis zu diesem Grenzbereich nicht entnommen werden konnte, kann die Steuerung der Vorrichtung 1 dazu ausgebildet sein, dass die Fördergeschwindigkeit der zweiten Fördereinrichtung 4 reduziert wird. Damit kann der Entnahmeeinrichtung 7 mehr Zeit eingeräumt werden, das Teil T vom Förderorgan 4.1 abzunehmen. Vorzugsweise erfolgt jedoch in diesem Ausführungsbeispiel kein vollständiges Anhalten der zweiten Fördereinrichtung 4.

In einer weiteren alternativen Ausführungsform erfolgt nicht nur eine Reduktion der Fördergeschwindigkeit der zweiten Fördereinrichtung 4, wenn ein abzunehmendes Teil T eine erste Grenzlinie bzw. einen ersten Grenzbereich im Entnahmebereich B3 überschritten hat, sondern es erfolgt nach dem Überschreiten einer zweiten Grenzlinie bzw. eines zweiten Grenzbereichs, der in Förderrichtung FR der zweiten Fördereinrichtung 4 hinter der ersten Grenzlinie bzw. dem ersten Grenzbereich liegt, ein weiteres Abbremsen oder vollständiges Anhalten der zweiten Fördereinrichtung 4, um ein Teil T, das sich in Gutlage befindet, in jedem Falle mittels der Entnahmeeinrichtung 7 entnehmen zu können und lediglich die Teile T, die aufgrund deren Lage auf dem Förderorgan 4.1 nicht entnehmbar sind, durch die Rückführeinrichtung 10 in den Bunker 2 zurückgefördert werden.

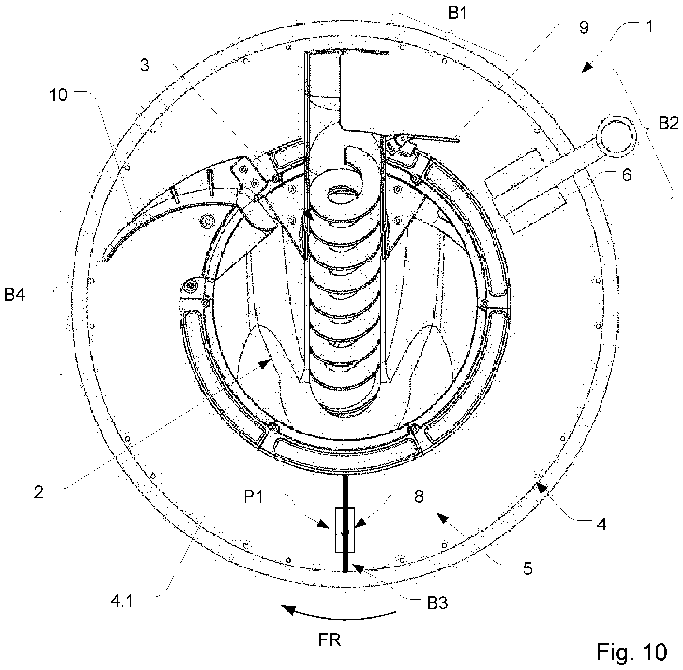

In Fig. 10 ist eine Vorrichtung 1 gezeigt, die für eine alternative Teileentnahme konfiguriert ist. Die zweite Fördereinrichtung 4 ist dabei dazu ausgebildet, ein zu entnehmendes Teil T, das sich in Gutlage befindet, an eine bestimmte Position oder einen bestimmten Sektor der Förderstrecke 5 zu bewegen, dort zu stoppen, so dass das zu entnehmende Teil T nicht bewegt ist. Nach dem Stoppen der zweiten Fördereinrichtung 4 kann die Entnahme des Teils T durch die Entnahmeeinrichtung 7 erfolgen. Die Position, an der das Stoppen des Teils T erfolgt, und damit der Entnahmebereich B3, kann sehr eng eingegrenzt sein und beispielsweise einen Winkelsektor kleiner als 10 Grad oder eine Länge kleiner als 1cm (bei einer als Linearförderer ausgebildeten zweiten Fördereinrichtung 4) umfassen.

Es sei erwähnt, dass keine Erzeugung von Vibrationen an der zweiten Fördereinrichtung 4 erfolgt, d.h. die Teile T nach dem Passieren der Ausrichteinrichtung 9 ihre Lage und Ausrichtung relativ zum Förderorgan 4.1 beibehalten, bis sie entweder durch die Entnahmeeinrichtung 7 von dem Förderorgan 4.1 abgenommen werden oder durch die Rückführeinrichtung 10 zurück in den Bunker 2 gefördert werden.

Vorzugsweise erfolgt ein Abgleichen der Fördergeschwindigkeit der ersten und zweiten Fördereinrichtung 3, 4 an die Abnahmeleistung der Entnahmeeinrichtung 7. Dadurch kann erreicht werden, dass näherungsweise nur so viele Teile T in korrekter Lage (zumindest im zeitlichen Mittel) auf die zweiten Fördereinrichtung 4 gelangen wie auch durch die Entnahmeeinrichtung 7 entnommen werden können. Dadurch kann ein mehrmaliges Fördern von Teilen T im Kreis wirksam vermieden werden.

Nachfolgend wird die Kalibrierung der Vorrichtung 1 näher erklärt. Unter "Kalibrierung" ist der Prozess zu verstehen, mittels dem die Lage und Ausrichtung des Erfassungsbereichs 6.1 der Kamera 6, der Koordinatenraum der Entnahmeeinrichtung 7 und der Entnahmebereich B3 miteinander derart verknüpft werden, dass anhand der von der Kamera 6 erfassten Bildinformationen des zu entnehmenden Teils berechnet werden kann, an welchen Koordinaten das Teil durch die Entnahmeeinrichtung 7 abgenommen werden kann. Für den Fall dass das Teil im bewegten Zustand von der zweiten Fördereinrichtung 4 abgenommen wird, ist unter "Kalibrierung" insbesondere der Prozess zu verstehen, wie der Koordinatenraum, basierend auf dem die Entnahmeeinrichtung 7 bewegt wird, derart mit der Förderstrecke 5 abgeglichen werden kann, dass nach dem Erfassen eines Teils durch die Kamera 6 im Teileerfassungsbereich B2 und dessen Weiterbewegung in den Entnahmebereich B3 die Entnahmeeinrichtung 7 auf die aktuelle, sich aufgrund der Bewegung ständig ändernde Position dieses Teil T bewegt werden kann, um dieses zu entnehmen.

Die zweite Fördereinrichtung 4 weist beispielsweise einen Encoder zur Bestimmung der aktuellen Drehlage oder Positionierung des Förderorgans 4.1 auf. Die Nulllage kann durch den Encoder selbst oder durch eine weitere Nullmarke festgelegt sein. Insbesondere kann die Nullmarke durch eine Kerbe oder eine Marke gebildet sein, die sensorisch abgetastet werden kann, beispielsweise durch eine Gabellichtschranke. Die Nullmarke wird vorzugsweise einmal pro Umlauf des Förderorgans 4.1 durchlaufen, so dass pro Umlauf eine Nullmarkeninformation empfangen wird. Die Winkelposition, die die aktuelle Drehlage oder Positionierung des Förderorgans 4.1 angibt, wird basierend auf der Nullmarke bestimmt.

Auf der Oberseite des Förderorgans 4.1, d.h. der Förderfläche, auf der die Teile gefördert werden, ist des Weiteren eine Referenzmarkierung 8 aufgebracht. Die Referenzmarkierung 8 ist derart ausgebildet, dass diese durch die Kamera 6 erfassbar ist. Die Referenzmarkierung 8 ist dazu ausgebildet, die Lage der Kamera 6 relativ zur zweiten Fördereinrichtung 4 zu bestimmen. Insbesondere kann mittels der Referenzmarkierung 8 der Winkelabstand der Kamera 6 relativ zur Nulllage der zweiten Fördereinrichtung 4 bestimmt werden.

Vorzugsweise ist die Referenzmarkierung 8 zudem dazu ausgebildet, dass die Ausrichtung des Erfassungsbereichs 6.1 der Kamera 6 relativ zur zweiten Fördereinrichtung 4 bestimmbar wird. Fig. 4 zeigt beispielhaft den Erfassungsbereich 6.1 der Kamera 6 und die darin befindliche Referenzmarkierung 8. Der Erfassungsbereich 6.1 weist vorzugsweise eine Größe derart auf, dass der Bereich der Förderfläche des Förderorgans 4.1, auf dem die unter der Kamera 6 hindurchgeförderten Teile T zu liegen kommen, durch den Erfassungsbereich 6.1 abgedeckt wird.

Die Referenzmarkierung 8 weist vorzugsweise eine Mittenmarke 8.1 auf, die den geometrischen Mittelpunkt der Referenzmarkierung 8 definiert. Durch diese Mittenmarke 8.1 lässt sich das Zentrum der Referenzmarkierung 8 und die Lage der Kamera 6 relativ zur zweiten Fördereinrichtung 4 exakt bestimmen.

Die Referenzmarkierung 8 weist vorzugsweise eine rotationsunsymmetrische Kontur, insbesondere Außenkontur auf. Dadurch kann die Ausrichtung bzw. Drehlage der Referenzmarkierung 8 relativ zum Erfassungsbereich 6.1 durch eine Bildverarbeitungsmethode ermittelt werden. Die Ausrichtung bzw. Drehlage ist in Fig. 4 durch den Winkel α gekennzeichnet.

Vorzugsweise ist die Referenzmarkierung 8 in einer vorgegebenen Ausrichtung auf die Förderfläche des Förderorgans 4.1 aufgebracht, so dass über die Ermittlung der Ausrichtung bzw. Drehlage der Referenzmarkierung 8 relativ zum Erfassungsbereich 6.1 der Kamera 6 auf die Ausrichtung bzw. Drehlage der zweiten Fördereinrichtung 4 relativ zum Erfassungsbereich 6.1 der Kamera 6 rückgeschlossen werden kann.

Beim Durchlauf der Referenzmarkierung 8 wird die Position der Referenzmarkierung 8 im Erfassungsbereich 6.1 ermittelt und beispielsweise durch Abspeicherung deren Koordinaten gesichert. Dies erfolgt vorzugsweise an einer vordefinierten Stelle im Erfassungsbereich 6.1, insbesondere im Zentrum des Erfassungsbereichs 6.1. Zudem kann der Winkel α abgespeichert werden, der die Ausrichtung bzw. Drehlage der Referenzmarkierung 8 relativ zum Erfassungsbereich 6.1 der Kamera 6 angibt.

Zudem wird auf Basis der Referenzmarkierung 8 die Lage des Förderorgans 4.1 und damit der Verlauf der Förderstrecke 5 im Koordinatensystem der Entnahmeeinrichtung 7, das diese zur Bewegung des Entnahmeorgans 7.1 nutzt, ermittelt. In anderen Worten wird die Entnahmeeinrichtung 7 derart konfiguriert, dass diese auf Basis der von der Kamera 6 erfassten Informationen zu einem zu entnehmenden Teil T und den Informationen, wie weit das Teil T durch das Förderorgan 4.1 bereits gefördert wurde (beispielsweise die Winkelinformation durch den Encoder), das Teil fixieren und von dem Förderorgan 4.1 abnehmen kann.

In einer Speichereinheit der Vorrichtung 1 kann eine in einem Längenmaß angegebene Größeninformation der Referenzmarkierung 8 gespeichert sein. Diese Größeninformation der Referenzmarkierung 8 kann dazu verwendet werden, zu ermitteln, wie groß ein Pixel der Bildinformationen der Kamera 6 in einem Längenmaß ist. So kann beispielsweise die Anzahl der Pixel, die in Längsrichtung die Referenzmarkierung 8 in den Bildinformationen darstellen, ermittelt werden und daraus die Größe eines Pixels im Längenmaß berechnet werden.

Die im Längenmaß angegebene Größe eines Pixels kann abgespeichert werden. Mittels dieser abgespeicherten Information ist es nach der Erfassung eines zu entnehmenden Teils möglich, das Entnahmeorgan mittels Steuerwerten, die in einem Längenmaß, beispielsweise im metrischen Maß, angegeben sind, anzusteuern.

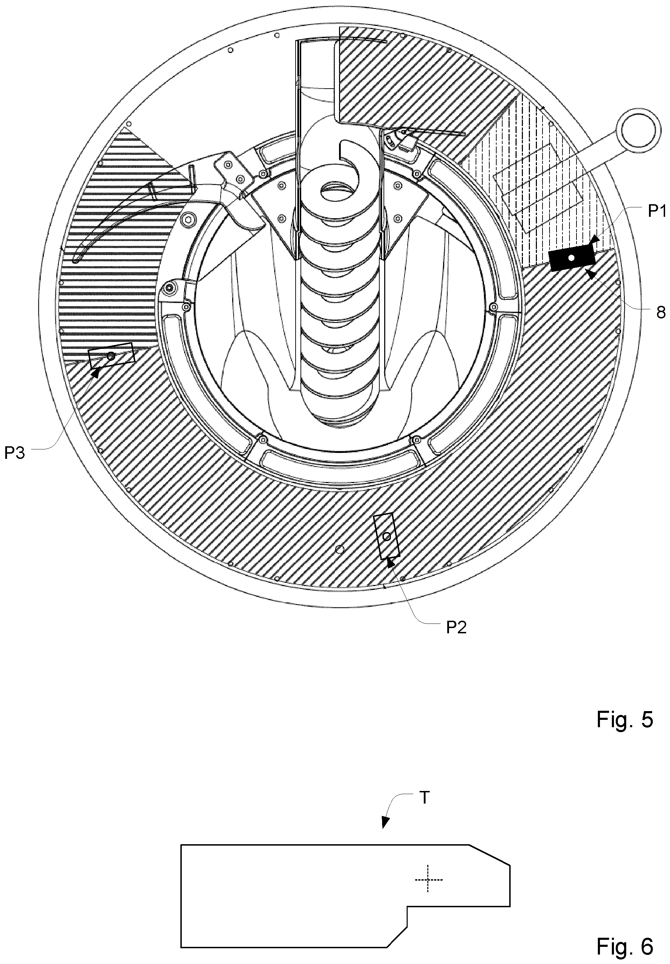

Nachfolgend wird das Erfassen der Lage des Entnahmebereichs B3 näher beschrieben. Für den Fall, dass die zweite Fördereinrichtung 4 kreisförmig ausgebildet ist und die Entnahme zu einem Zeitpunkt erfolgen soll, in der das Teil T bewegt wird, d.h. nicht nach dem Stoppen der zweiten Fördereinrichtung 4, wird die Lage der Förderstrecke im Raum bestimmt. Die Lage der kreisringartigen Förderstrecke 5 der zweiten Fördereinrichtung 4 lässt sich geometrisch durch drei Punkte entlang der Förderstrecke 5 ermitteln. Dazu wird die Referenzmarkierung 8, wie in Fig. 5 gezeigt, durch Weiterdrehen des Förderorgans 4.1 an drei Positionen P1, P2, P3 bewegt und das Entnahmeorgan 7.1 der Entnahmeeinrichtung 7 jeweils an diese drei Positionen P1, P2, P3 bewegt, um damit die Positionen der Entnahmeeinrichtung 7 in dessen Koordinatensystem zu ermitteln. Die Positionen P1, P2, P3 können derart gewählt sein, dass ein Paar von Positionen P1, P3 den Beginn und das Ende des Entnahmebereichs B3 definieren. Die dritte Position P2 kann zwischen diesen beiden Positionen P1, P3 gewählt sein, und zwar vorzugsweise in der Mitte des Entnahmebereichs B3, wie dies in Fig. 5 angedeutet ist. Diese Positionen P1, P2, P3 sind in Fig. 5 durch die Referenzmarkierungen 8 verdeutlicht, wobei die nicht ausgefüllt gezeichneten Referenzmarkierungen keine weiteren Referenzmarkierungen darstellen sollen, sondern die Referenzmarkierung 8, die durch Weiterbewegen des Förderorgans 4.1 in Förderrichtung FR verlagert wurde.

Anhand der drei Positionen P1, P2, P3 lässt sich der Mittelpunkt der kreisringförmigen Förderstrecke 5 und deren Radius bestimmen. Zudem lässt sich anhand der Positionen P1, P2, P3 die Drehrichtung der zweiten Fördereinrichtung 4 bestimmen.

Für den in Fig. 10 gezeigten Fall, dass die Entnahme des Teils T stets an einer definierten Winkelposition entlang der Förderstrecke 5 erfolgt, d.h. der Entnahmebereich B3 eine Linie oder im Wesentlichen eine Linie ist, die radial zur kreisbogenförmigen Förderstrecke 5 verläuft, ist es ausreichend, dass die Entnahmeeinrichtung 7 lediglich an einen Punkt bewegt wird, mittels dem diese Linie definierbar ist. Die Referenzmarkierung 8 wird hierzu vorzugsweise durch Weiterbewegen des Förderorgans 4.1 der zweiten Fördereinrichtung 4 an die Position P1 bewegt, an der der linienartige Entnahmebereich B3 liegen soll, und dort gestoppt. Anschließend wird das Entnahmeorgan 7 an diese Position P1 bewegt, um die Koordinaten des Entnahmeorgans 7 zu ermitteln, die das Entnahmeorgan 7 an dieser Position P1 hat. Zudem wird vorzugsweise auch die Drehlage oder Positionierung des Förderorgans 4.1 bestimmt, wenn sich das Entnahmeorgan 7 an der Position P1 befindet, um die den Drehwinkel zwischen der Nulllage des Förderorgans 4.1 und der Position P1 zu bestimmen.

Fig. 6 zeigt beispielhaft ein Teil T in einer Draufsichtdarstellung. Zur Erkennung der Form eines Teils kann eine Lernroutine vorgesehen sein, mittels der der Vorrichtung 1 die Form eines Teils T und die Position, an der das Teil T durch das Entnahmeorgan 7.1 ergriffen werden soll, übermittelt wird. Insbesondere kann mittels der Lernroutine die Außenkontur des Teils angelernt werden, die die Kamera 6 beim Hindurchfördern des Teils T erkennen muss, um ein entnehmbares Teil zu detektieren.

Beim Hindurchfördern der vereinzelten Teile T durch den Teileerfassungsbereich B2 werden Entnahmeinformationen ermittelt, d.h. solche Informationen, die für die nachfolgende Entnahme des Teils von der zweiten Fördereinrichtung erforderlich sind.

Die Entnahmeinformationen umfassen vorzugsweise die Winkellage des Förderorgans 4.1. Die Winkellage kann beispielsweise durch Erfassen von Informationen des Encoders der zweiten Fördereinrichtung 4 ermittelt werden, und zwar dann, wenn das Teil T durch die Kamera 6 erfasst wird. Die Informationen des Encoders geben damit den Winkel an, an dem das Teil T auf dem Förderorgan 4.1 liegt.

Zudem können beim Hindurchfördern des Teils T durch den Teileerfassungsbereich B2 als Entnahmeinformationen die Ausrichtung bzw. Drehlage des Teils T auf der Förderfläche bestimmt werden.

Zuletzt können beim Hindurchfördern des Teils T durch den Teileerfassungsbereich B2 als Entnahmeinformationen die in radialer Richtung gemessene Lage des Teils T ermittelt werden. Diese kann beispielsweise durch den Abstand des Teileabschnitts, an dem das Teil T ergriffen werden soll, zu dem Mittelpunkt der kreisringförmigen Förderstrecke 5 bestimmt werden.

Wenn durch die Kamera 6 erkannt wurde, dass das Teil T eine Lage auf der zweiten Fördereinrichtung 4 aufweist, die eine Entnahme ermöglicht, werden die Entnahmeinformationen vorzugsweise in einer Speichereinheit abgespeichert. Dadurch kann die Entnahmeeinrichtung 7 die Entnahmeinformationen aus der Speichereinheit auslesen, diese in Koordinaten der Entnahmeeinrichtung 7 umrechnen und das Entnahmeorgan 7.1 basierend auf den Koordinaten derart ansteuern, dass das Entnahmeorgan 7.1 an die Position bewegt wird, an der sich das Teil T aktuell befindet. Es versteht sich, dass dabei die weitere Drehbewegung der zweiten Fördereinrichtung 4 berücksichtigt werden muss.

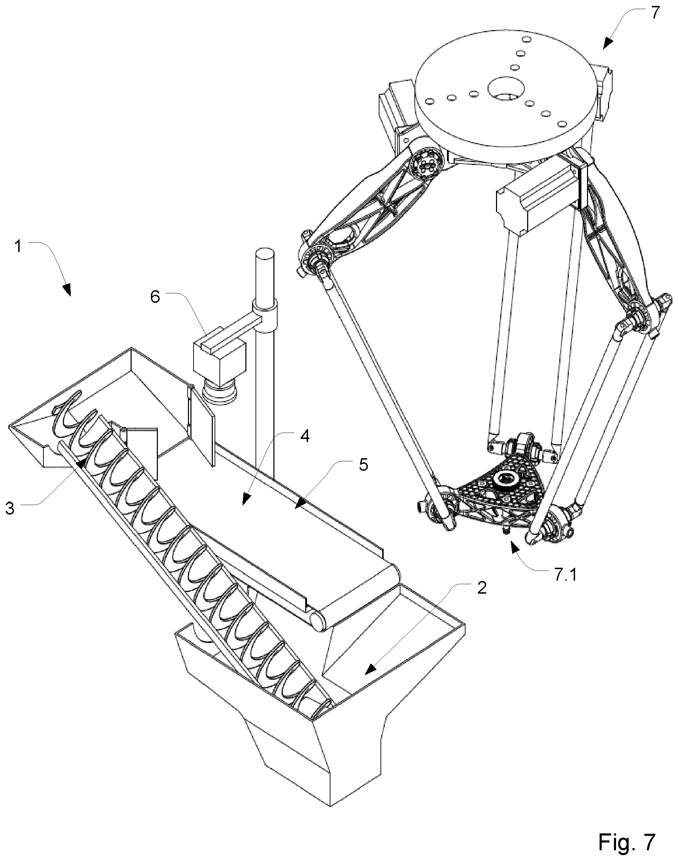

Fig. 7 bis 9 zeigen beispielhaft und schematisch eine zweite Ausführungsform einer Vorrichtung 1a zur Vereinzelung und Einzelentnahme von Teilen.

Nachfolgend werden lediglich die Unterschiede zu der zuvor beschriebenen Ausführungsform beschrieben. Im Übrigen gelten die zuvor beschriebenen technischen Details auch für dieses Ausführungsbeispiel. Der wesentliche Unterscheid zu dem ersten Ausführungsbeispiel der Vorrichtung 1 besteht darin, dass anstelle einer zweiten Fördereinrichtung 4 mit einer kreisringförmigen Förderstrecke eine zweite Fördereinrichtung 4 mit einer linearen Förderstrecke verwendet wird. Die zweite Fördereinrichtung 4 kann beispielsweise als lineares Förderband ausgebildet sein.

Die Vorrichtung 1a weist wiederum einen Bunker 2 und eine erste Fördereinrichtung 3 zur Förderung der zu entnehmenden Teile auf die zweite Fördereinrichtung 4 auf. Der Bunker 2 ist unterhalb der zweiten Fördereinrichtung 4 vorgesehen, und zwar beispielsweise unterhalb eines freien Endes bzw. Umlenkeinrichtung der zweiten Fördereinrichtung 4.

Die von der ersten Fördereinrichtung 3 nach oben geförderten Teile T werden über eine Leiteinrichtung, die insbesondere rutschenartig ausgebildet ist, auf die zweite Fördereinrichtung 4 überführt. Zur Vorausrichtung der Teile T auf der zweiten Fördereinrichtung 4 ist eine Ausrichteinrichtung 9 vorgesehen.

Durch die zweite Fördereinrichtung 4 werden die Teile anschließend entlang einer linearen Förderstrecke 5 weitergefördert, bis diese an dessen Ende angelangt sind. Falls diese nicht durch die Entnahmeeinrichtung 7 abgenommen wurden, fallen diese von der zweiten Fördereinrichtung 4 zurück in den Bunker 2.

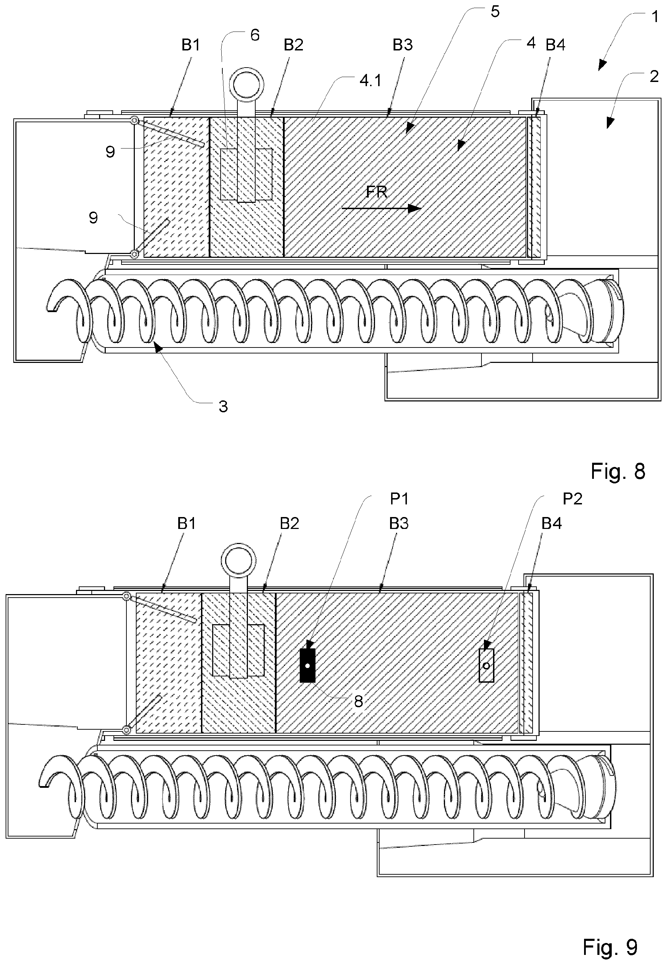

Wie insbesondere in Fig. 8 zu erkennen, ist die Förderstrecke 5 in mehrere Bereiche untergliedert, die in Förderrichtung FR aufeinanderfolgen.

In dem Ausrichtbereich B1 erfolgt wiederum ggf. eine Vorausrichtung der Teile, in dem Teileerfassungsbereich B2 die Erfassung der Teile T durch die Kamera 6, im Entnahmebereich B3 die Entnahme der Teile T durch die Entnahmeeinrichtung 7 und in Rückführbereich B4 die Rückförderung in den Bunker 2.

Fig. 9 verdeutlicht die Kalibrierung der Vorrichtung 1a mittels der auf dem Förderorgan 4.1 der zweiten Fördereinrichtung 4 aufgebrachten Referenzmarkierung 8. Aufgrund der linearen Ausbildung der zweiten Fördereinrichtung 4 ist es hier ausreichend, dass zur Ermittlung der Lage des Förderorgans 4.1 und damit dem Verlauf der Förderstrecke 5 im Koordinatensystem der Entnahmeeinrichtung 7 zwei Punkte durch das Entnahmeorgan 7.1 angefahren werden, falls die Entnahme zu einem Zeitpunkt erfolgen soll, in der das Teil T bewegt wird und damit die Lage der Förderstrecke 5 im Raum bekannt sein muss. Diese sind in Fig. 9 durch die Referenzmarkierungen 8 verdeutlicht, wobei die nicht ausgefüllt gekennzeichnete Referenzmarkierung keine zweite Referenzmarkierung darstellen soll, sondern die Referenzmarkierung 8, die durch Weiterbewegen des Förderorgans 4.1 in Förderrichtung FR verlagert wurde.

Zur Festlegung der Position des Teils T wird anstelle der Winkelposition, die die Position des kreisringförmigen Förderorgans 4.1 in der ersten Ausführungsform angegeben hat, ein Maß verwendet, das die Lage des Teils in Förderrichtung FR angibt. Dies kann entweder auch eine Encoderinformation sein oder ein Längenmaß. Die Position des Teils T in Querrichtung, d.h. quer zur Förderrichtung FR, kann über ein Längenmaß angegeben werden, das sich beispielsweise auf einen Rand des Förderorgans 4.1, auf die Mittellängsachse des Förderorgans 4.1 oder die parallel zur Förderrichtung FR verlaufende Achse, in der der Mittelpunkt der Referenzmarkierung 8 liegt, bezieht.

Für den Fall, dass bei einer linearen Ausbildung der zweiten Fördereinrichtung 4 die Entnahme des Teils T stets an einer definierten Position entlang der Förderstrecke 5 erfolgt, d.h. der Entnahmebereich B3 eine Linie oder im Wesentlichen eine Linie ist, die quer zur Förderrichtung FR verläuft, ist es auch hier ausreichend, dass die Entnahmeeinrichtung 7 lediglich an einen Punkt bewegt wird, mittels dem diese Linie definierbar ist (beispielsweise als Linie senkrecht oder im Wesentlichen senkrecht zur linearen, zweiten Fördereinrichtung 4). Die Referenzmarkierung 8 wird hierzu vorzugsweise durch Weiterbewegen des Förderorgans 4.1 der zweiten Fördereinrichtung 4 an die Position P1 bewegt, an der der linienartige Entnahmebereich B3 liegen soll, und dort gestoppt. Anschließend wird das Entnahmeorgan 7 an diese Position P1 bewegt, um die Koordinaten des Entnahmeorgans 7 zu ermitteln, die das Entnahmeorgan 7 an dieser Position P1 hat. Zudem wird vorzugsweise auch eine Positionsinformation des Förderorgans 4.1 (beispielsweise mittels einer Encoderinformation oder mittels einer Längenangabe) bestimmt, wenn sich das Entnahmeorgan 7 an der Position P1 befindet, um den Abstand zwischen der Nulllage des Förderorgans 4.1 und der Position P1 bestimmen zu können.

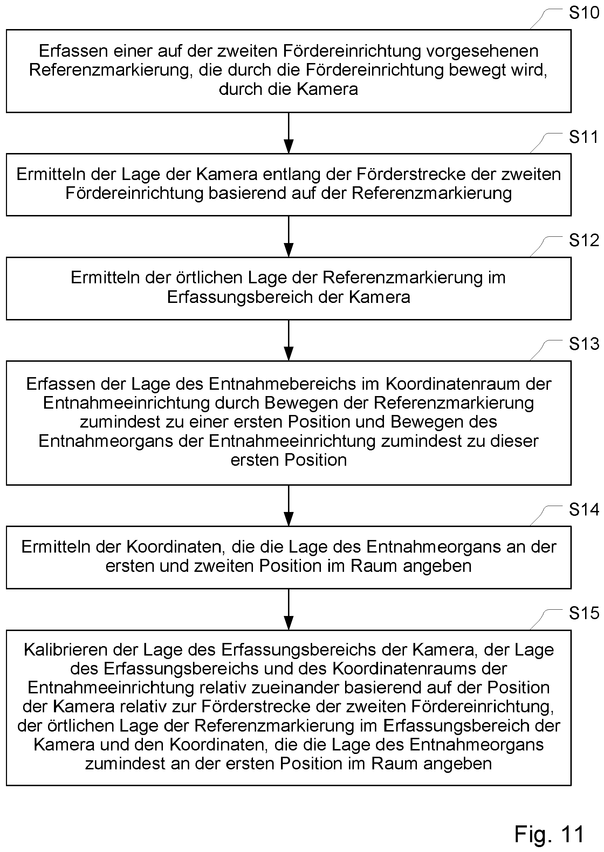

Fig. 11 zeigt ein Blockdiagramm, das die Schritte des Verfahrens zur Kalibrierung der Vereinzelungsvorrichtung verdeutlicht.

Zunächst wird eine auf der zweiten Fördereinrichtung vorgesehene und durch diese bewegte Referenzmarkierung durch die Kamera erfasst (S10).

Anschließend wird die Lage der Kamera entlang der Förderstrecke der zweiten Fördereinrichtung basierend auf der Referenzmarkierung ermittelt (S11).

Des Weiteren wird die örtliche Lage der Referenzmarkierung im Erfassungsbereich der Kamera ermittelt (S12).

Daraufhin wird die Lage des Entnahmebereichs im Koordinatenraum der Entnahmeeinrichtung durch Bewegen der Referenzmarkierung zumindest zu einer ersten Position und Bewegen des Entnahmeorgans der Entnahmeeinrichtung zumindest zu dieser ersten Position erfasst (S13).

Anschließend werden die Koordinaten ermittelt, die die Lage des Entnahmeorgans zumindest an der ersten Position im Raum angeben (S14).

Zuletzt wird die Lage des Erfassungsbereichs der Kamera, die Lage des Entnahmebereichs und der Koordinatenraum der Entnahmeeinrichtung relativ zueinander kalibriert, und zwar basierend auf der Position der Kamera relativ zur Förderstrecke der zweiten Fördereinrichtung, der örtlichen Lage der Referenzmarkierung im Erfassungsbereich der Kamera und den Koordinaten, die die Lage des Entnahmeorgans zumindest an der ersten im Raum angeben (S15).

Die Erfindung wurde voranstehend an Ausführungsbeispielen beschrieben. Es versteht sich, dass zahlreiche Änderungen sowie Abwandlungen möglich sind, ohne dass dadurch der durch die Patentansprüche definierte Schutzbereich verlassen wird.

### Bezugszeichenliste

- 1, 1a: Vorrichtung
- 2: Bunker
- 3: erste Fördereinrichtung
- 4: zweite Fördereinrichtung
- 4.1: Förderorgan
- 5: Förderstrecke
- 6: Kamera
- 6.1: Erfassungsbereich
- 7: Entnahmeeinrichtung
- 7.1: Entnahmeorgan
- 8: Referenzmarkierung
- 8.1: Mittenmarke
- 9: Ausrichteinrichtung
- 10: Rückführeinrichtung

- α: Winkel
- B1: Ausrichtbereich
- B2: Teileerfassungsbereich
- B3: Entnahmebereich
- B4: Rückführbereich
- FR: Förderrichtung
- P1: erste Position
- P2: zweite Position
- P3: dritte Position
- T: Teil

## Patentansprüche

1. Vorrichtung zur Vereinzelung und Einzelentnahme von Teilen umfassend einen Bunker (2) zur Aufnahme der als Schüttgut bereitgestellten Teile, eine erste Fördereinrichtung (3) zum Fördern der Teile von dem Bunker (2) auf eine zweite Fördereinrichtung (4), die eine Förderstrecke (5) ausbildet, eine über der Förderstrecke (5) angeordnete Kamera (6) zur Erfassung der Teile während diese von der zweiten Fördereinrichtung (4) durch den Erfassungsbereich (6.1) der Kamera (6) bewegt werden, eine Entnahmeeinrichtung (7) mit einem Entnahmeorgan (7.1), das zum Abnehmen der Teile von der zweiten Fördereinrichtung (4) in einem Entnahmebereich der Förderstrecke (5) ausgebildet ist, wobei eine Steuereinrichtung für die Entnahmeeinrichtung (7) vorgesehen ist, wobei die Steuereinrichtung dazu konfiguriert ist, die Entnahmeeinrichtung (7) derart anzusteuern, dass das Entnahmeorgan (7.1) der Entnahmeeinrichtung (7) ein einzelnes Teil während dessen Bewegung entlang der Förderstrecke (5) oder nach dem Stoppen der zweiten Fördereinrichtung (4) fixiert und von der Förderstrecke (5) abnimmt, wobei die Vorrichtung dazu eingerichtet ist, Teile nach dem Durchlaufen des Entnahmebereichs in den Bunker (2) zurückzufördern und die Ausrichtung der Teile relativ zur zweiten Fördereinrichtung (4) vor deren Entnahme durch die Entnahmeeinrichtung (7) im Entnahmebereich nicht zu verändern, wobei die zweite Fördereinrichtung (4) auf einer Förderfläche eine Referenzmarkierung (8) aufweist, mittels der die Lage und Ausrichtung des Erfassungsbereichs (6.1) der Kamera (6) relativ zur zweiten Fördereinrichtung (4) ermittelbar ist.

2. Vorrichtung nach Anspruch 1, **dadurch gekennzeichnet, dass** die Referenzmarkierung (8) rotationsunsymmetrisch ausgebildet ist, so dass die rotative, relativ zur zweiten Fördereinrichtung gemessene Ausrichtung der Kamera (6) um eine vertikale Hochachse als Drehachse durch die Referenzmarkierung (8) erfassbar ist.

3. Vorrichtung nach einem der vorhergehenden Ansprüche, **dadurch gekennzeichnet, dass** die Steuereinrichtung dazu eingerichtet ist, die Entnahmeeinrichtung (7) anhand von durch die Kamera (6) ermittelten Lageinformationen eines zu entnehmenden Teils und Bewegungsinformationen der zweiten Fördereinrichtung (4) auf das zu entnehmende Teil aufzusynchronisieren.

4. Vorrichtung nach einem der vorhergehenden Ansprüche, **dadurch gekennzeichnet, dass** die Steuereinrichtung dazu eingerichtet ist, ein Teil unter konstanter oder im Wesentlichen konstanter Weiterbewegung der zweiten Fördereinrichtung (4) zu entnehmen.

5. Vorrichtung nach einem der vorhergehenden Ansprüche, **dadurch gekennzeichnet, dass** die Steuereinrichtung dazu eingerichtet ist, die Fördergeschwindigkeit der zweiten Fördereinrichtung (4) zu reduzieren, wenn ein zu entnehmendes Teil innerhalb eines ersten Teils der Förderstrecke (5) nicht entnommen wurde.

6. Vorrichtung nach Anspruch 5, **dadurch gekennzeichnet, dass** die Steuereinrichtung dazu eingerichtet ist, die zweite Fördereinrichtung (4) zu stoppen, wenn ein zu entnehmendes Teil innerhalb eines zweiten Teils der Förderstrecke (5), in dem das Teil mit reduzierter Fördergeschwindigkeit transportiert wurde, nicht entnommen wurde.

7. Vorrichtung nach Anspruch 1 oder 2, **dadurch gekennzeichnet, dass** die Vorrichtung dazu ausgebildet ist, ein zu entnehmendes Teil an eine bestimmte Position oder einen bestimmten Sektor der Förderstrecke (5) zu bewegen, die zweite Fördereinrichtung (4) zu stoppen, so dass sich das zu entnehmende Teil an der Position oder in dem Sektor befindet und nicht bewegt wird und nach dem Stoppen der zweiten Fördereinrichtung (4) die Entnahme des Teils durch die Entnahmeeinrichtung (7) erfolgt.

8. Vorrichtung nach einem der vorhergehenden Ansprüche, **dadurch gekennzeichnet, dass** die Kamera (6) dazu eingerichtet ist, die Lage und/oder Ausrichtung eines Teils während dessen kontinuierlicher Bewegung durch den Erfassungsbereich (6.1) zu erfassen.

9. Vorrichtung nach Anspruch 8, **dadurch gekennzeichnet, dass** die Steuereinrichtung dazu eingerichtet ist, die Teilelage des durch die zweite Fördereinrichtung (4) transportierten Teils basierend auf der von der Kamera (6) erfassten Lage und/oder Ausrichtung des Teils und erfassten Bewegungsinformationen der zweiten Fördereinrichtung (4) zu bestimmen, um das Teil entnehmen zu können.

10. Vorrichtung nach einem der vorhergehenden Ansprüche, **dadurch gekennzeichnet, dass** die Kamera (6) in einem Teileerfassungsbereich der Förderstrecke (5) angeordnet ist und dass der Teileerfassungsbereich in Förderrichtung (FR) vor dem Entnahmebereich vorgesehen ist.

11. Vorrichtung nach einem der vorhergehenden Ansprüche, **dadurch gekennzeichnet, dass** am Beginn der Förderstrecke (5) eine Ausrichteinrichtung (9) vorgesehen ist, die eine Vorausrichtung der auf die zweite Fördereinrichtung (4) aufgeförderten Teile bewirkt.

12. Verfahren zur Kalibrierung einer Vorrichtung (1) zur Vereinzelung und Einzelentnahme von Teilen, die eine zweite Fördereinrichtung (4) zur Förderung der Teile in Förderrichtung (FR) entlang einer Förderstrecke (5), eine Kamera (6) zur Erfassung der Teile und eine Entnahmeeinrichtung (7) mit einem Entnahmeorgan (7.1) zur Entnahme der auf der Fördereinrichtung (4) geförderten Teile umfasst, wobei das Kalibrierverfahren folgende Schritte umfasst:
- Erfassen einer auf der zweiten Fördereinrichtung (4) vorgesehenen und durch diese bewegten Referenzmarkierung (8) durch die Kamera (6) (S10);
- Ermitteln der Lage der Kamera (6) entlang der Förderstrecke (5) der zweiten Fördereinrichtung (4) basierend auf der Referenzmarkierung (8) (S11);
- Ermitteln der örtlichen Lage der Referenzmarkierung (8) im Erfassungsbereich (6.1) der Kamera (6) (S12);
- Erfassen der Lage eines Entnahmebereichs (B3) im Koordinatenraum der Entnahmeeinrichtung (7) durch Bewegen der Referenzmarkierung (8) zumindest zu einer ersten Position (P1) und Bewegen des Entnahmeorgans (7.1) der Entnahmeeinrichtung (7) zumindest zu dieser ersten Position (P1) (S13);
- Ermitteln der Koordinaten, die die Lage des Entnahmeorgans (7.1) an der ersten Position (P1) im Raum angeben (S14);
- Kalibrieren der Lage des Erfassungsbereichs (6.1) der Kamera (6), der Lage des Entnahmebereichs (B3) und des Koordinatenraums der Entnahmeeinrichtung (7) relativ zueinander basierend auf der Position der Kamera (6) relativ zur Förderstrecke (5) der zweiten Fördereinrichtung (4), der örtlichen Lage der Referenzmarkierung (8) im Erfassungsbereich (6.1) der Kamera (6) und den Koordinaten, die die Lage des Entnahmeorgans (7.1) zumindest an der ersten Position (P1) im Raum angeben (S15).

13. Verfahren nach Anspruch 12, **dadurch gekennzeichnet, dass** der Entnahmebereich (B3) ein quer zur Förderrichtung (FR) verlaufender linienartiger Bereich oder ein sich in Förderrichtung (FR) entlang der Förderstrecke (5) erstreckender Bereich ist.

14. Verfahren nach Anspruch 12 oder 13, **dadurch gekennzeichnet, dass** die rotative Ausrichtung der Referenzmarkierung (8) um eine vertikale Hochachse als Drehachse durch die Kamera (6) erfasst wird.

15. Verfahren nach einem der Ansprüche 12 bis 14, **dadurch gekennzeichnet, dass** aus den Bildinformationen, die beim Erfassen der Referenzmarkierung (8) aufgenommen werden, eine pixelbezogene Größeninformation der Referenzmarkierung ermittelt wird, dass basierend auf der pixelbezogenen Größeninformation und einer in einem Längenmaß gespeicherten Größeninformation der Referenzmarkierung eine in einem Längenmaß angegebene Pixelgröße berechnet wird und dass die Pixelgröße zur Ansteuerung der Entnahmeeinrichtung (7) verwendet wird.
